# EUROPÄISCHE PATENTSCHRIFT

(11) **EP 1 666 775 B1**
(45) Veröffentlichungstag und Bekanntmachung des Hinweises auf die Patenterteilung: **23.01.2008**
(21) Anmeldenummer: 05018703.8
(22) Anmeldetag: 29.08.2005
(51) Int. Cl.: F16J 15/08

(54) **Zylinderkopfdichtung mit Schutzbeschichtung**
Cylinder head gasket with protective layer
Joint de culasse avec couche protectrice

(30) Priorität: 02.12.2004 DE 102004058234
(43) Veröffentlichungstag der Anmeldung: 07.06.2006
(73) Patentinhaber: Federal-Mogul Sealing Systems GmbH, 57562 Herdorf (DE)
(72) Erfinder: Flemming, Ralf, 57520 Langenbach (DE); Cierocki, Klaus, 57080 Siegen (DE)
(74) Vertreter: Becker, Eberhard

(56) Entgegenhaltungen:
- EP-A- 0 756 114
- EP-A- 1 522 770
- WO-A-20/05080834
- DE-A1- 10 065 199
- DE-A1- 10 248 395
- DE-A1- 10 301 713
- US-A- 5 685 547

## Beschreibung

Die vorliegende Erfindung betrifft eine Zylinderkopfdichtung mit einem Dichtbereich und umlaufende Beschichtungen zum Abdichten von Motorbauteilen.

Bei der Konstruktion von Verbrennungskraftmaschinen werden vermehrt Materialien verwendet, die sich gegenüber lange bekannten Werkstoffen wie Gußeisen durch verbesserte Eigenschaften wie geringeres Gewicht auszeichnen. Vor allem Aluminium- und neuerdings verstärkt Magnesiumlegierungen werden dazu verwendet.

Da verschiedene Bauteile eines Motors ganz unterschiedlichen Anforderungen genügen müssen, kommt es beim Aufbau solcher Maschinen zwangsläufig dazu, dass verschiedene Metalle bzw. Metalllegierungen Verwendung finden. Obwohl dies natürlich eine große Flexibilität in Bezug auf die Anpassung der entsprechenden Materialien an die jeweiligen Erfordernisse bedeutet, treten im Vergleich zu Motoren aus nur einem Werkstoff, wie beispielsweise Gußeisen, neue Probleme auf. Dabei ist unter anderem die Neigung zur Kontaktkorrosion nennen, die auftritt, wenn verschiedene Metalle bzw. Metalllegierungen in Kontakt stehen. An Verbindungsstellen solcher Materialpaarungen können Flüssigkeiten wie beispielsweise Salzwasser eintreten, die die Korrosion fördern.

Insbesondere Magnesiumlegierungen, die aufgrund ihrer vorteilhaften Materialeigenschaften in Zukunft vermehrt im Motorenbau anzutreffen sein dürften, besitzen gegenüber dem häufig bei Zylinderkopfdichtungen verwendeten Federstahl ein stark abweichendes Redoxpotenzial. Im Falle einer solchen Materialkombination, natürlich auch bei anderen Legierungen mit abweichendem Potenzial, sind Vorkehrungen notwendig, um die Kontaktkorrosion zu reduzieren, welche die Lebensdauer von Motorbauteilen verringern kann.

Es ist daher wünschenswert, die Kontaktstellen verschiedener Materialien in geeigneter Weise abzudichten, um Beschädigungen zu verhindern, die durch den Eintritt von Flüssigkeit hervorgerufen werden können.

Bei Verbrennungsmotoren ist die Zylinderkopfdichtung ein besonders gefährdeter Bereich. Hier werden verschiedene Materialien, wie beispielsweise ein Aluminium-Zylinderkopf mit dem Motorblock miteinander verbunden, der aus einer Magnesiumlegierung besteht.

Weiterhin sind Durchtrittsöffnungen z.B. für Kühlflüssigkeit vorhanden, und auch auf der Außenseite des Motors können Flüssigkeiten wie etwa Salzwasser in die Verbindungsstelle zwischen den einzelnen Teilen eintreten. Es ist daher insbesondere erforderlich, eine Zylinderkopfdichtung an den besonders exponierten Randkanten von Durchtrittsöffnungen sowie an der außen liegenden Randkante gegenüber eintretenden Flüssigkeiten abzudichten, sowie möglichst die Kontaktflächen von Zylinderkopf und Motorblock zu schützen, um der Kontaktkorrosion entgegenzuwirken.

Die DE 103 01 713 A1 offenbart eine Zylinderkopfdichtung für einen Verbrennungsmotor, die zwei übereinander liegende Dichtbleche und eine am Außenrand umlaufende Dichtung enthält. Die Dichtung steht im eingebauten Zustand vorzugsweise über die Außenfläche des Zylinderblocks vor, so dass von der Dichtung tropfendes Wasser nicht mit der Außenfläche des Zylinderblocks in Berührung kommt.

Der Randbereich des durch DE 103 01 713 A1 offenbarten Dichtsystems kann jedoch nicht vollständig verhindern, dass Flüssigkeiten in den direkten Kontaktbereich durchsickern.

Auch die in der DE 102 48 395 A1 vorgestellte Dichtung leistet es nicht, den direkten Kontaktbereich vollständig vor dem Eindringen von Flüssigkeiten zu schützen.

Aufgabe der vorliegenden Erfindung ist es, eine Zylinderkopfdichtung bereitzustellen, die dem Eindringen von Flüssigkeit insbesondere in den Motor und im Kontaktbereich zwischen Motorblock und Zylinderkopf entgegenwirkt.

Die Aufgabe wird durch eine Zylinderkopfdichtung gelöst, bei der der Randbereich der Dichtung mit Hilfe eines erfindungsgemäßen Dichtbereichs geschützt wird.

Gemäß einem Aspekt der Erfindung wird eine Zylinderkopfdichtung zur Abdichtung von einem ersten und einem zweiten Bauteil einer Verbrennungskraftmaschine angegeben, umfassend eine Funktionslage mit einem umlaufenden Randbereich, und eine erste Schutzlage mit einem über den Randbereich der Funktionslage vorspringenden Dichtbereich bzw. Stopperbereich, eine zweite Schutzlage mit einem über den Randbereich der Funktionslage vorspringenden Dichtbereich, wobei die erste Schutzlage im vorspringendem Dichtbereich mindestens eine erste umlaufende Beschichtung aufweist, wobei die zweite Schutzlage im vorspringendem Dichtbereich mindestens eine zweite umlaufende Beschichtung aufweist, wobei die erste Beschichtung angeordnet ist, im eingebauten Zustand der Zylinderkopfdichtung an der zweiten Beschichtung anzuliegen, und wobei die Funktionslage zwischen der ersten Schutzlage und der zweiten Schutzlage angeordnet ist. Dadurch kann Flüssigkeit nicht direkt in den Brennraum einer Verbrennungskraftmaschine eintreten und zusätzlich wird die Stahllage vor Korrosion geschützt. Die Beschichtung der Schutzlage im Dichtbereich verbessert das Dichtverhalten der Zylinderkopfdichtung. Durch den Einsatz einer zweiten Schutzlage mit entsprechender Beschichtung wird eine weitere erfindungsgemäße Verbesserung des Abdichtverhaltens erreicht.

Die Funktionslage weist bevorzugt eine Vollsicke im Kontaktbereich mit der ersten Schutzlage auf. Die Vollsicke verbessert das Abdichtverhalten und kann flexibler auf Vibrationen des Motors reagieren.

Die erste Schutzlage umfasst bevorzugt eine weitere umlaufende Beschichtung, die im eingebauten Zustand das zweite Bauteil kontaktiert und in Höhe des Randbereichs der Funktionslage angeordnet ist. Durch den direkten Kontakt mit dem Bauteil, und dadurch dass beide Bauteile aufeinander gepresst werden, kann die Beschichtung einen erweiterten Schutz im Dichtbereich bereitstellen. Somit kann keine Flüssigkeit in den Dichtbereich durchsickern.

Die zweite Schutzlage umfasst bevorzugt eine weitere umlaufende Beschichtung, die im eingebauten Zustand das erste Bauteil kontaktiert und in Höhe des Randbereichs der Funktionslage angeordnet ist. Analog zu der Beschichtung der ersten Schutzlage wirkt die erfindungsgemäße weitere Beschichtung dem Eintreten von Flüssigkeiten in den Brennraum entgegen.

Die Funktionslage ist bevorzugt eine metallische Funktionslage, die erste Schutzlage wird bevorzugt aus Aluminium gefertigt und die zweite Schutzlage wird ebenfalls aus Aluminium gebildet. Aluminium ist unempfindlich gegenüber Flüssigkeiten und kann die Funktionslage und den Motorblock im Dichtbereich vor Korrosion schützen. Metallische Funktionslagen eignen sich besonders, da sie wirtschaftlich vorteilhaft sind und haben ebenfalls zusätzlich gute elastische Eigenschaften, um mögliche Vibrationen des Motors zu absorbieren.

Es sind bevorzugt weitere Funktionslagen vorgesehen. Dadurch wird ein verbessertes Abdichtverhalten erreicht und die elastischen Eigenschaften der Abdicht- bzw. Stopperzone werden ebenfalls verbessert.

Die Beschichtungen sind bevorzugt mit Hilfe eines Siebdruckverfahrens aufgebracht. Dieses Verfahren eignet sich besonders vorteilhaft zum Aufbringen von Beschichtungen.

Die Schutzlage umfasst bevorzugt weitere Dichtsicken im Kontaktbereich mit dem jeweiligen Bauteil. Dies verbessert weiter das Abdichtverhalten.

Das Bauteil wird bevorzugt im eingebauten Zustand der Zylinderkopfdichtung von der Beschichtung kontaktiert. Durch den direkten Kontakt zwischen Beschichtung und Bauteil wird die Dichtigkeit im Abdichtbereich erfindungsgemäß erhöht.

Das erste Bauteil ist bevorzugt ein Aluminiumzylinderkopf und das zweite Bauteil ist bevorzugt ein Motorblock aus einer Magnesiumlegierung. Motorblöcke aus Magnesiumlegierungen in Kombination mit Aluminiumzylinderköpfen werden verstärkt in der Fertigung von modernen Verbrennungskraftmaschinen eingesetzt.

Die Funktionslage ist bevorzugt eine Stahllage. Stahllagen haben besonders vorteilhafte elastische Eigenschaften und sind günstig in der Herstellung.

Weitere Vorteile und Merkmale der vorliegenden Erfindung werden aus der folgenden Beschreibung von Ausführungsformen der Erfindung ersichtlich, in der auf die angefügten Zeichnungen Bezug genommen wird, in der:
Fig. 1 ein nicht beanspruchtes Beispiel einer Zylinderkopfdichtung im Querschnitt darstellt;
Fig. 2 eine bevorzugte erfindungsgemäße Ausführungsform der vorliegenden Erfindung im Querschnitt darstellt;
Fig. 3 eine andere bevorzugte erfindungsgemäße Ausführungsform der Zylinderkopfdichtung im Querschnitt zeigt.

In den Figuren entspricht jeweils die rechte Seite der Figur der Außenseite, d.h. der von den Brennräumen abgewandten Seite der Dichtung, während die linke Seite dem nach innen gerichteten Teil entspricht, wo sich Verbrennungsräume oder dergleichen befinden. Während die Erfindung in den hier dargestellten Beispielen im Bezug auf den äußeren Randbereich der Funktionslage beschrieben wird, kann natürlich ebenso eine innen liegende Randkante etwa eines Kühlmitteldurchflusses auf die beschriebene Art geschützt werden.

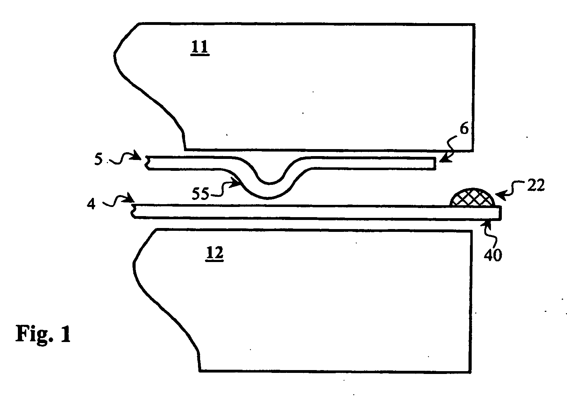

Fig. 1 zeigt ein nicht beanspruchtes Beispiel einer Zylinderkopfdichtung, um das Verständnis der Erfindung zu erleichtern. Sie kann eingesetzt werden, um beispielsweise zwei Bauteile 11 und 12 eines Motors abzudichten. Bauteil 11 kann dem Aluminiumzylinderkopf bzw. Zylinderkopf entsprechen und Bauteil 12 entspricht dem Mg-Motorblock. Die Bauteile 11 und 12 können einen Brennraum des Motors umschließen und die Zylinderkopfdichtung soll dem Eintreten von Flüssigkeiten in den erwähnten Brennraum entgegenwirken.

Die Zylinderkopfdichtung umfasst im Wesentlichen eine Funktionslage 5 und eine Schutzlage 4, wobei die Schutzlage 4 im vorspringenden Dichtbereich 40 eine umlaufende Beschichtung 22 umfasst. Die Funktionslage 5 weist einen ebenfalls umlaufenden Randbereich 6 auf, der sich unmittelbar an der Außenseite des Motors befindet.

Eine Dichtsicke 55 ist in der Funktionslage 5 vorgesehen und verbessert das Abdichtverhalten der Zylinderkopfdichtung, und stellt somit eine erweiterte Abdichtzone der Funktionslage dar. Durch die Dichtsicke 55 entstehen zusätzlich verbesserte elastische Eigenschaften der Funktionslage 5. Vibrationen des im Betrieb befindlichen Motors werden durch die Dichtsicke zuverlässig gedämpft und Gase aus dem Brennraum können nicht mehr austreten. Die Dichtsicke wirkt ebenfalls dem Eintreten von Wasser in den Brennraum entgegen.

Im eingebauten Zustand werden alle Lagen aufeinander gepresst, so dass eine feste Abdichtung der Bauteile 11 und 12 entsteht. Die Beschichtung 22 im vorspringenden Dichtbereich 40 der Schutzlage 4 wird erfindungsgemäß an die Randkante des Zylinderkopfes gepresst, so dass sie sich umformt, und infolgedessen einen zuverlässigen fluid-dichten Bereich formt. Salzwasser oder andere von der Außenseite eintretende Flüssigkeiten werden durch die Beschichtung 22 aufgehalten. Falls trotzdem Wasser eintreten sollte, wird es im weiteren Verlauf der Funktionslage 5 durch die Dichtsicke 55 gestoppt, so dass es den Brennraum des Motors nicht erreichen kann.

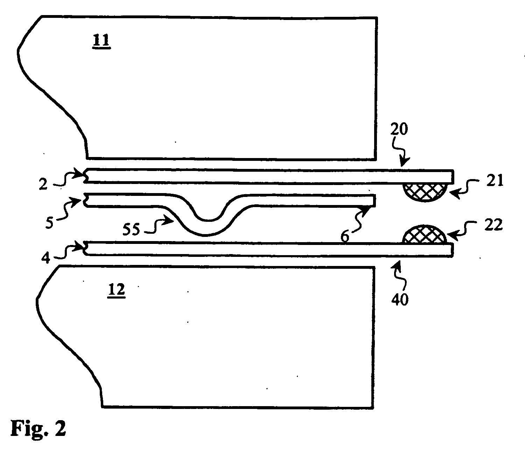

Fig. 2 zeigt eine vorteilhafte Ausführungsform der Zylinderkopfdichtung, wobei zwei Aluminiumschutzlagen 2 und 4 verwendet werden. Diese schließen eine Stahllage bzw. Funktionslage 5 ein, deren Aufbau der Beschreibung von Fig. 1 entnommen werden kann.

Beide Schutzlagen 2 und 4 weisen jeweils vorspringende Dichtbereiche 20 und 40 auf, die im eingebauten Zustand einen zuverlässigen Abdichtungsbereich um die Stahllage 5 bilden. Der Dichtbereich 20 weist eine umlaufende Beschichtung 21 auf und entsprechend wird die Schutzlage 4 im Dichtbereich 40 mit einer umlaufenden Beschichtung 22 versehen. Die Beschichtungen 21 und 22 sind so angeordnet, dass sie im eingebauten Zustand der Zylinderkopfdichtung überlappen und eine Abdichtzone bilden. Diese Abdichtzone wirkt dem Eintreten von Flüssigkeit an der Funktionslage 5 entgegen. Die Stahllage 5 kann somit nicht mehr so leicht korrodieren und das Abdichtverhalten der Zylinderkopfdichtung ist beständiger.

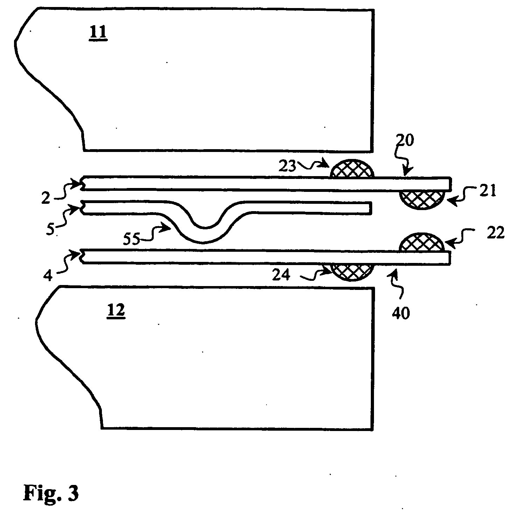

Die in der Fig. 3 dargestellte Zylinderkopfdichtung entspricht im Wesentlichen der Ausführungsform aus Fig. 2. Zusätzlich weist die Dichtung zwei weitere Beschichtungen 23 und 24 auf. Die umlaufenden Beschichtungen 23 und 24 sind so gelegen, dass sie im Abdichtbereich im eingebauten Zustand direkt den Motorblock bzw. den Zylinderkopf unmittelbar am angrenzenden Außenbereich kontaktieren. Der Zylinderkopf und der Motorblock werden aufeinander gepresst, wodurch im Bereich der Beschichtungen 23 bzw. 24 jeweils eine Abdichtzone entsteht, die dem Eintreten von Flüssigkeiten in den Brennraum entgegenwirkt. Die Stahllage 5 wird weiterhin durch die Schutzlagen 2 und 4 geschützt und zusätzlich durch den von den Beschichtungen 21 und 22 gebildeten Dichtbereich.

Obwohl die Erfindung speziell in Bezug auf die dargelegten Ausführungsformen aufgezeigt wurde, ist für Fachleute, die mit dem Stand der Technik vertraut sind, klar ersichtlich, dass Änderungen an oder in der Form oder in Details ausgeführt werden können, ohne den Schutzumfang der durch die angefügten Ansprüchen definierten Erfindung zu verlassen.

## Patentansprüche

1. Zylinderkopfdichtung zur Abdichtung von einem ersten und einem zweiten Bauteil (11, 12) einer Verbrennungskraftmaschine, umfassend eine Funktionslage (5) mit einem umlaufenden Randbereich (6), und eine erste Schutzlage (4) mit einem über den Randbereich (6) der Funktionslage (5) vorspringenden Dichtbereich (40), wobei die erste Schutzlage (4) im vorspringendem Dichtbereich (40) mindestens eine erste umlaufende Beschichtung (22) aufweist, **gekennzeichnet durch** eine zweite Schutzlage (2) mit einem über den Randbereich (6) der Funktionslage (5) vorspringenden Dichtbereich (20), wobei die zweite Schutzlage (2) im vorspringendem Dichtbereich (20) mindestens eine zweite umlaufende Beschichtung (21) aufweist, wobei die erste Beschichtung (21) angeordnet ist, im eingebauten Zustand der Zylinderkopfdichtung an der zweiten Beschichtung (22) anzuliegen, und wobei die Funktionslage (5) zwischen der ersten Schutzlage (4) und der zweiten Schutzlage (2) angeordnet ist.

2. Zylinderkopfdichtung nach Anspruch 1, wobei die Funktionslage (5) eine Vollsicke (55) im Kontaktbereich mit der ersten Schutzlage (4) aufweist.

3. Zylinderkopfdichtung nach irgendeinem der vorhergehenden Ansprüche, wobei die erste Schutzlage (4) eine weitere umlaufende Beschichtung (24) umfasst, die im eingebauten Zustand das zweite Bauteil (12) kontaktiert und in Höhe des Randbereichs (6) der Funktionslage (5) angeordnet ist.

4. Zylinderkopfdichtung nach irgendeinem der vorhergehenden Ansprüche, wobei die zweite Schutzlage (2) eine weitere umlaufende Beschichtung (23) umfasst, die im eingebauten Zustand das erste Bauteil (11) kontaktiert und in Höhe des Randbereichs (6) der Funktionslage (5) angeordnet ist.

5. Zylinderkopfdichtung nach irgendeinem der vorhergehenden Ansprüche, wobei die Funktionslage (5) eine metallische Funktionslage ist, die Schutzlage (2) aus Aluminium gefertigt ist und die Schutzlage (4) aus Aluminium gebildet ist.

6. Zylinderkopfdichtung nach irgendeinem der vorhergehenden Ansprüche, wobei die Funktionslage (5) weitere Funktionslagen aufweist.

7. Zylinderkopfdichtung nach irgendeinem der vorhergehenden Ansprüche, wobei die Beschichtungen (21, 22, 23, 24) mit Hilfe eines Siebdruckverfahrens aufgebracht werden.

8. Zylinderkopfdichtung nach irgendeinem der vorhergehenden Ansprüche, wobei die Schutzlage (2, 4) weitere Dichtsicken im Kontaktbereich mit dem jeweiligen Bauteil (11) bzw. (12) aufweist.

9. Zylinderkopfdichtung nach irgendeinem der vorhergehenden Ansprüche, wobei im eingebauten Zustand der Zylinderkopfdichtung die zweite Beschichtung (22) das erste Bauteil (11) kontaktiert.

10. Zylinderkopfdichtung nach irgendeinem der vorhergehenden Ansprüche, wobei die Funktionslage (5) eine Stahllage ist.

## Claims

1. Cylinder head gasket for sealing a first and second component (11, 12) of an internal combustion engine, comprising a functional layer (5) with a peripheral edge region (6) and a first protective layer (4) with a sealing region (40) protruding beyond the edge region (6) of the functional layer (5), wherein the first protective layer (4) has at least one first peripheral coating (22) in the protruding sealing region (40), **characterised by** a second protective layer (2) with a sealing region (20) protruding beyond the edge region (6) of the functional layer (5), wherein the second protective layer (2) has at least one second peripheral coating (21) in the protruding sealing region (20), wherein the first coating (21) is disposed to lie, in the installed condition of the cylinder head gasket, against the second coating (22), and wherein the functional layer (5) is disposed between the first protective layer (4) and the second protective layer (2).

2. Cylinder head gasket according to claim 1, wherein the functional layer (5) has a full bead (55) in the region of contact with the first protective layer (4).

3. Cylinder head gasket according to any one of the preceding claims, wherein the first protective layer (4) has a further peripheral coating (24) which, in the installed condition, contacts the second component (12) and is disposed at the level of the edge region (6) of the functional layer (5).

4. Cylinder head gasket according to any one of the preceding claims, wherein the second protective layer (2) has a further peripheral coating (23) which, in the installed condition, contacts the first component (11) and is disposed at the level of the edge region (6) of the functional layer (5).

5. Cylinder head gasket according to any one of the preceding claims, wherein the functional layer (5) is preferably a metallic functional layer, the protective layer (2) is preferably made from aluminium and the protective layer (4) is made from aluminium.

6. Cylinder head gasket according to any one of the preceding claims, wherein the functional layer (5) has further functional layers.

7. Cylinder head gasket according to any one of the preceding claims, wherein the coatings (21, 22, 23, 24) are applied with the aid of a silk screen printing method.

8. Cylinder head gasket according to any one of the preceding claims, wherein the protective layer (2, 4) has further sealing beads in the region of contact with the respective component (11) or (12).

9. Cylinder head gasket according to any one of the preceding claims, wherein in the installed condition of the cylinder head gasket, the first component (11) is preferably contacted by the second coating (22).

10. Cylinder head gasket according to any one of the preceding claims, wherein the functional layer (5) is a steel layer.

## Revendications

1. Joint de culasse pour réaliser l'étanchéité entre un premier et un deuxième élément (11, 12) d'un moteur à combustion interne, comportant une couche fonctionnelle (5) avec une zone de bordure (6) périphérique, et une première couche de protection (4) avec une zone d'étanchéité (40) saillante au-delà de la zone de bordure (6) de la couche fonctionnelle (5), la première couche de protection (4) comportant au moins un premier revêtement (22) périphérique dans la zone d'étanchéité (40) saillante, **caractérisé par** une deuxième couche de protection (2) avec une zone d'étanchéité (20) saillante au-delà de la zone de bordure (6) de la couche fonctionnelle (5), la deuxième couche de protection (2) comportant au moins un deuxième revêtement (21) périphérique dans la zone d'étanchéité (20) saillante, le premier revêtement (21) étant agencé de manière à être en contact avec le deuxième revêtement (22) à l'état monté du joint de culasse, et la couche fonctionnelle (5) étant agencée entre la première couche de protection (4) et la deuxième couche de protection (2).

2. Joint de culasse selon la revendication 1, dans lequel la couche fonctionnelle (5) comporte un bossage (55) dans la zone de contact avec la première couche de protection (4).

3. Joint de culasse selon l'une quelconque des revendications précédentes, dans lequel la première couche de protection (4) comporte un revêtement (24) périphérique supplémentaire qui, à l'état monté, entre en contact avec le deuxième élément (12) et est agencé à la hauteur de la zone de bordure (6) de la couche fonctionnelle (5).

4. Joint de culasse selon l'une quelconque des revendications précédentes, dans lequel la deuxième couche de protection (2) comporte un revêtement (23) périphérique supplémentaire qui, à l'état monté, entre en contact avec le premier élément (11) et est agencé à la hauteur de la zone de bordure (6) de la couche fonctionnelle (5).

5. Joint de culasse selon l'une quelconque des revendications précédentes, dans lequel la couche fonctionnelle (5) est une couche fonctionnelle métallique, la couche de protection (2) est réalisée en aluminium et la couche de protection (4) est réalisée en aluminium.

6. Joint de culasse selon l'une quelconque des revendications précédentes, dans lequel la couche fonctionnelle (5) comporte d'autres couches fonctionnelles.

7. Joint de culasse selon l'une quelconque des revendications précédentes, dans lequel les revêtements (21, 22, 23, 24) sont déposés au moyen d'un procédé de sérigraphie.

8. Joint de culasse selon l'une quelconque des revendications précédentes, dans lequel la couche de protection (2, 4) comporte d'autres bossages d'étanchéité dans la zone de contact avec l'élément respectif (11) ou (12).

9. Joint de culasse selon l'une quelconque des revendications précédentes, dans lequel, à l'état monté du joint de culasse, le deuxième revêtement (22) entre en contact avec le premier élément (11).

10. Joint de culasse selon l'une quelconque des revendications précédentes, dans lequel la couche fonctionnelle (5) est une couche en acier.
